(19) **Europäisches Patentamt**

**European Patent Office**

**Office européen des brevets**

(11) **EP 0 777 864 B1**

(12) **EUROPÄISCHE PATENTSCHRIFT**

(45) Veröffentlichungstag und Bekanntmachung des Hinweises auf die Patenterteilung:
**13.06.2001 Patentblatt 2001/24**

(51) Int Cl.7: **G01V 8/10**

(21) Anmeldenummer: **95929852.2**

(86) Internationale Anmeldenummer:
**PCT/EP95/03193**

(22) Anmeldetag: **11.08.1995**

(87) Internationale Veröffentlichungsnummer:
**WO 96/06368 (29.02.1996 Gazette 1996/10)**

(54) **SYSTEM UND VERFAHREN ZUR BILDAUSWERTUNG**

IMAGE-EVALUATION SYSTEM AND PROCESS

SYSTEME ET PROCEDE D'EVALUATION D'IMAGES

(84) Benannte Vertragsstaaten:
**AT BE CH DE DK ES FR GB GR IE IT LI LU MC NL PT SE**

(30) Priorität: **24.08.1994 DE 4430016**

(43) Veröffentlichungstag der Anmeldung:
**11.06.1997 Patentblatt 1997/24**

(60) Teilanmeldung:
**00108866.5 / 1 026 632**

(73) Patentinhaber: **Seisma AG**
**6300 Zug (CH)**

(72) Erfinder: **DORNIER, Claudio**
**CH-6312 Steinhausen (CH)**

(74) Vertreter: **Grünecker, Kinkeldey,**
**Stockmair & Schwanhäusser Anwaltssozietät**
**Maximilianstrasse 58**
**80538 München (DE)**

(56) Entgegenhaltungen:
**EP-A- 0 410 826       DE-A- 4 332 753**
**US-A- 4 249 207**

## Beschreibung

Die Erfindung bezieht sich auf ein System und ein Verfahren zur Bildauswertung nach der Patentanmeldung P 44 07 528.6, die am 21.09.95 nachveröffentlicht wurde.

Gemäß dem in vorstehend genannter Patentanmeldung erwähnten Stand der Technik, wie er beispielsweise in der DE-PS 36 28 816 offenbart ist, wird ein von einem Videosensor geliefertes Videosignal abgetastet und eine vorbestimmte Anzahl von Abtastwerten, die einem Teilfeld des Videobilds entsprechen, wird als Summenwert zusammengefaßt und anschließend gespeichert.

Durch Vergleich der Summenwerte der Teilfelder eines aktuellen Videobildes mit denjenigen eines gespeicherten, vorhergehenden Videobildes ist eine Änderung des Bildinhalts aufgrund einer Bewegung innerhalb des Bildausschnitts feststellbar.

Zur Auswertung einer festgestellten Bildänderung werden die sich ändernden Teilfelder einer Überprüfung auf bestimmte Alarmrelevanz-Kriterien unterzogen. Bei Erfüllung vorbestimmter Kriterien wie beispielsweise Überschreitung einer bestimmten Mindest-Objektgröße (z.B. 6 zusammenhängende Teilfelder) wird ein Alarm ausgelöst.

Ferner können auch sogenannte Referenzfelder vorprogrammiert werden, die selbst keinen Alarm auslösen, die jedoch bei einer alarmrelevanten Änderung ihres Bildinhalts das System in eine höhere Alarmfeldebene versetzen bzw. weitere sogenannte Alarmfelder aktivieren. Dabei können verschiedenen Alarmfeldern unterschiedliche Alarmfeldebenen zugewiesen werden, wobei nur die Alarmfelder zu einer Alarmauslösung führen, die der vorherrschenden Alarmfeldebene zugeordnet sind.

Eine Bildänderung muß demnach zuerst in einem Referenzfeld (Voralarmzone) auftreten, bevor eine alarmrelevante Änderung in einem Alarmfeld einer höheren Alarmfeldebene zur Auslösung eines Alarms führt. Die Referenzfelder dienen also lediglich als Umschaltfelder oder zur logischen Verknüpfung.

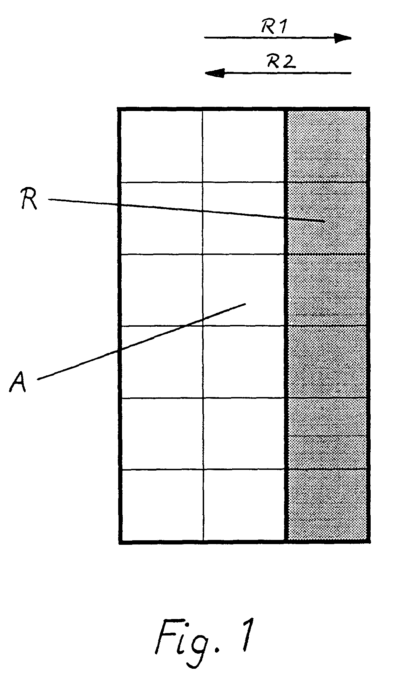

Fig. 1 zeigt ein vereinfachtes Teilfeldraster aus 18 Teilfeldern, bei dem die rechte Spalte aus sechs Referenzfeldern R besteht, die bei alarmrelevanter Änderung zu einer Umschaltung in eine zweite Alarmfeldebene führen, und die linke und mittlere Spalte aus jeweils sechs Alarmfeldern A bestehen, denen die zweite Alarmfeldebene zugeordnet ist.

Bewegt sich eine alarmrelevante Bildänderung in Richtung R2, so wird zunächst ein Referenzfeld R aktiviert, wodurch eine Umschaltung in die zweite Alarmfeldebene und damit eine Aktivierung der Alarmfelder A erfolgt. Eine nachfolgende alarmrelevante Änderung innerhalb der Alarmfelder A führt somit zu einer Alarmauslösung.

Eine Bewegung einer alarmrelevanten Änderung in Richtung R1 hingegen führt bei Erreichen der Alarmfelder A zu keiner Alarmierung, da im Ausgangszustand die erste Alarmfeldebene vorherrscht.

Durch einen solchen Aufbau ist also eine von der Zonenfolge der Bildänderung abhängige Alarmierung möglich.

Der in Fig. 1 gezeigte Referenzfeldbereich kann beispielsweise den Bereich einer Umzäunung abdecken und der Alarmfeldbereich ein zu schützendes Gelände.

Ein Einbrecher, der sich von einer Position außerhalb des zu schützenden Geländes, d.h. in Richtung R2, dem Alarmfeldbereich nähert, betritt zunächst den Referenzfeldbereich und aktiviert somit die Alarmfelder. Sobald er daraufhin den Alarmfeldbereich betritt, wird Alarm ausgelöst.

Ein Wachmann hingegen, der sich ausschließlich innerhalb des zu schützenden Geländes und damit nicht im Referenzfeldbereich bewegt, führt nicht zu einer Aktivierung der Alarmfelder A. Eine durch ihn hervorgerufene Änderung im Alarmfeldbereich führt demnach zu keiner Alarmauslösung.

Dies gilt jedoch nur, wenn zuvor keine relevante Bildänderung im Referenzfeldbereich aufgetreten ist.

Bei einer derartigen Auswertung ist die Feststellung eines örtlichen oder zeitlichen Zusammenhangs einer Bildänderung rein zufällig, da eine Zuordnung der Bildänderungen nicht möglich ist. Beispielsweise kann eine witterungsbedingte Bildänderung, die z.B. durch Mastwackeln, Laubaufwirbeln oder Schlagschattenbildung hervorgerufen wird, zu einer andauernden Aktivierung der Referenzfelder führen, wodurch das Bildauswertesystem ständig in die zweite Alarmfeldebene versetzt wird und somit die Alarmfelder A aktiviert sind.

Eine durch den Wachmann verursachte Bildänderung würde in diesem Fall zu einer Alarmauslösung führen.

Desweiteren kann eine, in einem Alarmfeld der zweiten Alarmfeldebene auftretende, witterungsbedingte Bildänderung, die in keinem Zusammenhang mit einer zuvor in einem Referenzfeld aufgetretenen, tatsächlich alarmreleventen Bildänderung steht, zu einer Alarmauslösung führen.

Bei den herkömmlichen Verfahren und Systemen zur Bildauswertung ist daher eine zonenabhängige Auswertung der Bildänderungen häufig fehlerhaft und damit unzuverlässig.

Die Druckschrift US 4 249 207 offenbart ein System und ein Verfahren zur Bildauswertung, bei denen ein vorbestimmter Überwachungsbereich in eine Vielzahl von Zellen aufgeteilt wird und die Veränderung eines integrierten Videosignals einer jeden Zelle überwacht wird. Als Kriterium für eine Meldungsauslösung wird die Anzahl von benachbarten, sich ändernden Zellen in einer bestimmten Richtung ausgewertet. Verändern sich beispielsweise drei in der vorbestimmten Richtung aufeinanderfolgende Bildzonen, so wird ein Eindringling im Überwachungsbereich angenommen.

Eine Einteilung des Überwachungsbereichs in vorbestimmte Bildzonen mit unterschiedlicher Melderelevanz ist nicht vorgesehen.

Der Erfindung liegt daher die Aufgabe zugrunde, ein System und Verfahren zur Bildauswertung zu schaffen, mittels dem eine zuverlässige zonenabhängige Auswertung ermöglicht wird.

Diese Aufgabe wird erfindungsgemäß gelöst durch ein Bildauswertesystem gemäß Patentanspruch 1.

Ferner wird die Aufgabe gelöst durch ein Verfahren zur Bildauswertung gemäß Patentanspruch 14.

Durch die objektbezogene Auswertung der Zonenwechsel und der Melderelevanz der betreffenden Bildzonen kann die Zuverlässigkeit der Bildauswertung beträchtlich erhöht werden.

Vorteilhafte Ausgestaltungen der Erfindung sind in den Unteransprüchen aufgeführt.

Die Erfindung wird nachstehend anhand eines Ausführungsbeispiels unter Bezugnahme auf die Zeichnung näher beschrieben. Es zeigen:

Fig. 1 ein Teilfeldraster eines herkömmlichen Systems zur Bildauswertung,

Fig. 2 ein Blockschaltbild eines Systems zur Bildauswertung gemäß einem Ausführungsbeispiel,

Fig. 3 einen Überwachungsbildausschnitt des Systems zur Bildauswertung nach dem Ausführungsbeispiel.

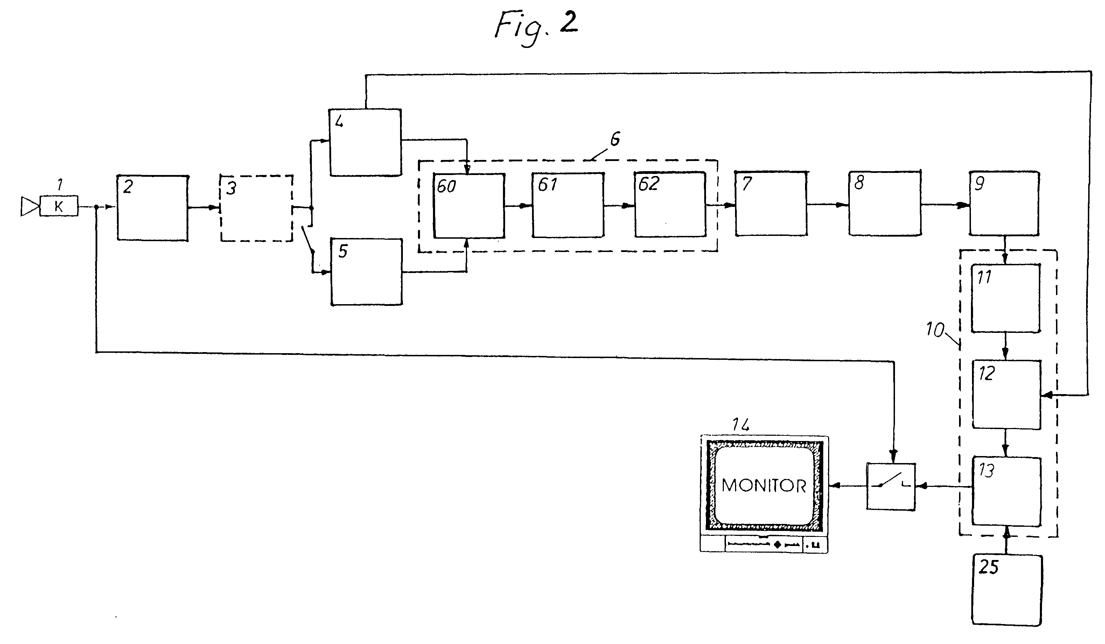

Das in Fig. 2 dargestellte Blockschaltbild zeigt ein Ausführungsbeispiel eines Systems zur Bildauswertung.

Das von einer Kamera 1 gelieferte Videosignal wird mittels eines Analog/Digital-Wandlers 2 digitalisiert. Die Kamera 1 kann eine übliche Videoüberwachungskamera aber auch eine Infrarot- oder Wärmebildkamera zur Erzeugung des Videosignals sein. Die digitalisierten Bildpunktdaten können wahlweise zur Reduktion der Datenmenge durch eine Reduzierstufe 3, wie z.B. in der DE-PS 36 28 816 näher beschrieben, durch gruppenweises Addieren einzelner Bildpunktdaten zu neuen Bildpunktdaten zusammengefaßt werden oder direkt in einem ersten Bildspeicher 4 (LIVE-Speicher) gespeichert werden.

In periodischen Abständen wird das reduzierte oder in voller Auflösung digitalisierte Bild in einem zweiten Bildspeicher 5 (REFERENZ-Speicher) gespeichert.

Eine Differenzbild-Erzeugungseinrichtung 6, die durch einen Signalprozessor oder eine festverdrahtete Rechenschaltung realisierbar ist, bildet für jedes neue Bild den Differenzbetrag zwischen einander entsprechenden, ggf. reduzierten Bildpunktdaten des "LIVE-Bilds" und des "REFERENZ-Bilds". Die Differenzbild-Erzeugungseinrichtung 6 umfaßt einen Subtraktionsteil 60, einen Betragsbildungsteil 61 sowie einen Schwellwertvergleicherteil 62. Die Differenz der Bildpunktdaten eines bestimmten Bildpunktes wird nach der Betragsbildung mit einem Schwellwert verglichen, der die Entscheidungsschwelle für eine Bildpunktänderung darstellt. Durch diese "Empfindlichkeitsschwelle" werden durch Signalrauschen hervorgerufene Änderungen eliminiert.

Bei Überschreiten des Schwellwerts wird ein Binärwert "1" und bei Unterschreiten des Schwellwerts ein Binärwert "0" in einen Binärbildspeicher 7 eingeschrieben. Die Bildpunkte mit dem Binärwert "1" stellen also markierte Bildpunkte dar, bei denen eine Bildveränderung festgestellt wurde.

Nachfolgend wird das so gebildete Binärbild mittels eines Objektextraktors 8, der beispielsweise durch einen Mikroprozessor realisierbar ist, auf zusammenhängende markierte Bildpunkte untersucht, wobei alle zusammenhängenden Bildpunkte einem sogenannten Objekt zugeordnet werden. Demgemäß entspricht ein Objekt einem zusammenhängenden Bildbereich, der sich innerhalb eines bestimmten, von dem Speicherzyklus des zweiten Bildspeichers abhängigen Zeitraums geändert hat. In einer Objektliste werden Objektdaten der extrahierten Objekte wie beispielsweise Erfassungskoordinaten, Abmessungen etc. gespeichert. Die Objekte werden beispielsweise als ein die maximale horizontale und vertikale Ausdehnung des markierten Bildpunktbereichs umschreibendes Rechteck odgl. definiert.

Im weiteren Verlauf der Verarbeitung werden nicht mehr einzelne Bildpunkte sondern lediglich die extrahierten Objekte verwendet, wodurch sich die Verarbeitungsgeschwindigkeit beträchtlich erhöht.

Die aktuelle Objektliste wird mit einer gespeicherten Objektliste des vorhergehenden Bildes mittels eines ebenfalls durch einen Mikroprozessor realisierbaren Objektkorrelators 9 verglichen und aktualisiert. Dabei werden die aus dem aktuellen Binärbild extrahierten Objekte den in dem vorhergehenden Bild gefundenen Objekten durch Plausibilitätsprüfung, wie z.B. Prüfung auf minimale Entfernung, ähnliche Form odgl. zugeordnet. Nicht zuordenbare Objekte werden als neue Objekte gespeichert und Objekte, denen über eine bestimmte Zeitdauer kein Objekt zugeordnet wurde, werden wieder gelöscht.

Im folgenden wird die Auswertung der Objektdaten mit dem Ziel der Erfassung alarmrelevanter Objekte und anschließender Alarmauslösung beschrieben. Dies geschieht in einer Auswertungseinrichtung 10.

Eine Objektverfolgungseinheit 11 berechnet einen Vektor, der sich aus dem Unterschied des Erfassungspunktes, nämlich des Mittelpunktes eines neuen Objekts, und dem gespeicherten Mittelpunkt M(x;y) des zugeordneten korrelierten Objekts des vorangegangenen Bilds ergibt. Aus dem berechneten Vektor werden eine zurückgelegte Strek-

ke s als Betrag des Vektors, eine horizontale und vertikale Richtungskomponente $R_H$ bzw. $R_V$ sowie eine mittlere Geschwindigkeit v unter Ansetzen der bisherigen Bestanddauer T des betreffenden Objekts ermittelt.

Nach Auswertung der neuen Objektdaten durch die Objektverfolgungseinheit 11 wird die aktualisierte Objektliste durch die ermittelten Werte für den Betrag des Bewegungsvektors s, die mittlere Geschwindigkeit v, die bisherige Bestanddauer T und die Bewegungsrichtungskomponenten $R_H$ und $R_V$ ergänzt.

Ein Objekt weist beispielsweise einen aktuellen Erfassungsmittelpunkt (2;0) auf. Der zuletzt gespeicherte Mittelpunkt hat die Koordinaten (3,5;1,5). Daraus ergibt sich gemäß dem Satz des Pythagoras eine Wegstrecke zu:

$$s = ((x_n - x_{n-1})^2 + (y_n - y_{n-1})^2)^{0,5}$$

$$= (1,5^2 + 1,5^2)^{0,5}$$

$$= 2,1.$$

Für die Richtungskoordinaten ergeben sich die Werte:

$$R_H = x_n - x_{n-1} = -1,5$$

$$R_V = Y_n - Y_{n-1} = -1,5.$$

Wird eine bisherige Bestanddauer T = 2 des Objekts angenommen, so ergibt sich eine mittlere Geschwindigkeit von:

$$v = s/T = 1,05.$$

Eine nachfolgende, wiederum mittels Mikroprozessor realisierbare Merkmalsextraktionseinheit 12 liest die Bilddaten im Bereich der alarmrelevanten Objektrechtecke aus dem ersten Bildspeicher 4 aus und extrahiert in diesem Bildausschnitt nach bekannten Bildverarbeitungsverfahren Bildinhaltsmerkmale für das Objekt. Diese Merkmalsextraktion geschieht allerdings nur für alarmrelevante Objekte, d.h. für Objekte, die eine vorbestimmte Richtung, Größe, Geschwindigkeit usw. aufweisen. Dabei wird zur Bestimmung der Objektgröße die Größe des extrahierten Rechtecks sowie die innerhalb des Rechtecks gefundene Anzahl markierter Bildpunkte herangezogen.

Bei der anschließenden objektbezogenen Bildverarbeitung können auch einfache Merkmale wie beispielsweise die Farbe des Objekts extrahiert werden.

In einer Meldeobjektprüfungseinheit 13 werden schließlich alle Merkmale der extrahierten und verfolgten Objekte mit einer vorbestimmten Liste erforderlicher Merkmalskriterien verglichen und nur bei gleichzeitiger Erfüllung aller Kriterien wird ein Alarm ausgelöst und das Videosignal auf einen Monitor 14 geschaltet, wobei die Alarmobjekte mit den zugehörigen Vektoren eingeblendet werden.

Im folgenden wird eine zonenabhängige Auswertung der Merkmale der extrahierten Objekte anhand eines Ausführungsbeispiels näher erläutert.

Durch die ständige Objektkorrelation und anschließende Merkmalsextraktion nach Größe, Form, Geschwindigkeit etc. ist eine selektive, objektbezogene Zonenauswertung möglich.

Die auf die Richtung des Objekts bezogenen Merkmalskriterien zur Alarmauslösung werden anhand von vorprogrammierbaren Bildzonen, die mittels einer üblichen Eingabevorrichtung 25 wie beispielsweise einer Tastatur, einer Maus oder einem Lichtgriffel am Monitor 14 markierbar sind, definiert.

Die Festlegung der Bildzonen geschieht beispielsweise durch Eingabe der Eckkoordinaten eines die Bildzone umschreibenden Polygonzuges, die in der Meldeobjektprüfungseinheit 13 gespeichert und zur Merkmalsauswertung herangezogen werden.

Zur Vereinfachung der Kontrolle können die auf diese Weise markierten Bildzonen durch bestimmte Farben am Monitor 14 hervorgehoben werden.

Im vorliegenden Ausführungsbeispiel sind drei Bildzonen mit unterschiedlichen logischen Auswertungskriterien markierbar. Tab. 1 zeigt eine mögliche Bezeichnung und Farbenzuordnung der Bereiche.

Tab.1

| BEREICH | FARBE | BEZEICHNUNG |
|---------|-------|-------------|
| A | grün | Erfassungszone |
| B | gelb | Alarmzone |
| C | rot | Prioritätszone |

Für jedes extrahierte Objekt wird anhand der zugehörigen Koordinaten in der Objektliste festgestellt, in welchem Bereich es sich augenblicklich befindet. Außerhalb der drei markierten Bereiche findet keine Objektverfolgung bzw. Auswertung statt.

Die drei Bildzonen werden in der Meldeobjektprüfungseinheit 13 zur Auswertung folgender Alarmrelevanz-Kriterien herangezogen:

- in der Erfassungszone A wird kein Alarm ausgelöst, unabhängig aus welcher Richtung ein Objekt in die Zone eintritt;

- bleibt ein Objekt innerhalb der Alarmzone B wird ebenfalls kein Alarm ausgelöst;

- dringt ein Objekt in die Prioritätszone C ein, so wird immer ein Alarm ausgelöst;

- bei Überschreitung der einzelnen Zonen gelten für die Beurteilung der Alarmrelevanz ferner die in Tab. 2 dargestellten logischen Zusammenhänge;

- ein Alarm wird nur dann ausgelöst, wenn alle übrigen Alarmrelevanz-Kriterien (betreffend z.B. Größe, Geschwindigkeit etc.) erfüllt sind.

Tab. 2

| VON | NACH | ALARM |
|-----|------|-------|
| A | A | nein |
| A | B | ja |
| A | C | ja |
| B | B | nein |
| B | A | nein |
| B | C | ja |
| C | C | ja |
| C | B | ja |
| C | A | nein |

Ein Objekt wird beispielsweise in der Erfassungszone A erkannt und in der Objektliste gespeichert. Bewegt sich nun dieses Objekt in der Weise, daß alle Alarmrelevanz-Kriterien erfüllt sind, so wird solange kein Alarm ausgelöst, bis das Objekt mit seinem Objektmittelpunkt, auf den sich die gespeicherten Objektkoordinaten beziehen, die Alarmzone B erreicht hat.

Bewegt sich ferner ein Objekt (z.B. ein Vogel), dessen Geschwindigkeit sich jedoch außerhalb des als Alarmrelevanz-Kriterium eingestellten Geschwindigkeitsbereiches befindet, von der Alarmzone B in die Prioritätszone C, so wird kein Alarm ausgelöst.

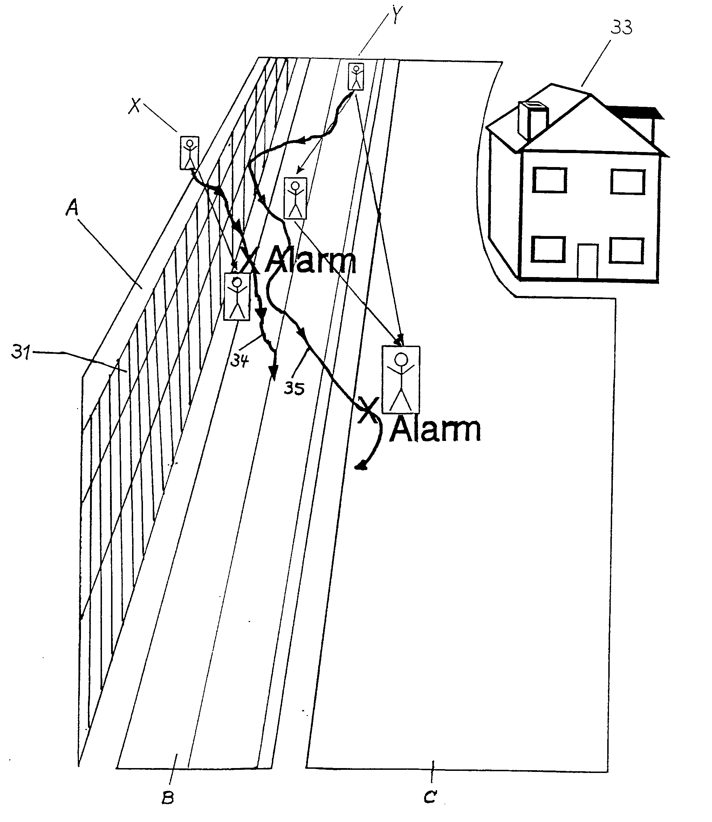

Fig. 3 zeigt einen von der Überwachungskamera 1 erfaßten und am Monitor 14 sichtbaren Bildausschnitt, in dem die drei Bildzonen A, B und C gekennzeichnet sind. Ferner sind in dem Bildausschnitt eine Umzäunung 31, ein Weg 32 und ein Gebäude 33 erkennbar, wobei die Bildzonen derart programmiert wurden, daß eine Erfassungszone A im Bereich der Umzäunung 31, eine Alarmzone B im Bereich des Weges 32 und eine Prioritätszone C im Bereich des Gebäudes 33 und des zu sichernden Geländes angeordnet sind.

Weiterhin sind unterschiedliche bewegte Objekte durch die entsprechenden Extraktionsrechtecke X, Y und

# EP 0 777 864 B1

deren Bewegungsverläufe 34, 35 dargestellt, anhand derer die Auswertungskriterien nachfolgend näher beschrieben werden.

Ein bewegtes Objekt X, das einen potentiellen Einbrecher darstellt, wird beispielsweise in der Erfassungszone A erfaßt. Wird zum gleichem Zeitpunkt in der Alarmzone B Laub aufgewirbelt, so erfolgt keine Alarmauslösung, da die Laubänderung, selbst wenn sie alarmrelevant wäre, aufgrund ihrer Form und Position im Objektkorrelator 9 als neues Objekt eingestuft wird. Sobald jedoch das Objekt X gemäß dem Bewegungsverlauf 34 mit seinem Mittelpunkt die Alarmzone B erreicht erfolgt eine Alarmierung.

Andererseits kann sich ein einen Wachmann darstellendes Objekt Y gemäß dem Bewegungsverlauf 35 innerhalb der Alarmzone B bewegen, ohne einen Alarm auszulösen. Das Objekt Y ist nämlich in der Alarmzone B erfaßt worden, ohne zuvor die Erfassungszone A betreten zu haben.

Da die Prioritätszone C mit keiner der anderen Zonen verknüpft ist, wird bei deren Betreten durch das Objekt Y in jedem Falle Alarm ausgelöst.

Durch Einführung zusätzlicher Alarmrelevanz-Kriterien ist sogar ein Mehrfach-Zonenwechsel erfaßbar. Hierzu wird beispielsweise anhand der ebenfalls in der Objektliste gespeicherten Koordinaten des erstmaligen Erfassungspunktes des Objekts festgestellt, in welcher Bildzone das Objekt zuerst erfaßt wurde.

Beispielsweise wird der in Fig. 3 dargestellte Wechsel des Objekts Y von der Alarmzone B in die Erfassungszone A und wieder zurück dadurch ermöglicht, daß eine Alarmauslösung dann verhindert wird, wenn sich die Koordinaten des erstmaligen Erfassungspunktes in der Alarmzne B befinden.

Zur Auswertung von Mehrfachwechseln kann dementsprechend die Tab. 2 durch eine zusätzliche Spalte für die Bildzone, in der sich die Koordinaten des ersten Erfassungspunktes befinden, ergänzt werden.

Es werden ein System und ein Verfahren zur Bildauswertung offenbart, gemäß denen ein aus einem digitalisierten Videosignal einer Überwachungskamera 1 gewonnenes Differenzbild, in dem sich ändernde Bildpunkte markiert sind, mittels eines Objektextraktors 8 auf zusammenhängende Bildpunkte (Objekte) untersucht wird. Die extrahierten Objekte werden gespeicherten Objekten eines vorangegangenes Bildes zugeordnet. Durch Auswertung bestimmter Relevanz-Kriterien, die von der Veränderung der Objektposition in Bezug auf vorbestimmbare Bildzonen A, B, C unterschiedlicher Melderelevanz abhängig sind, erfolgt eine zonenabhängige Meldungsabgabe.

**Patentansprüche**

1. Bildauswertesystem zum Auswerten von einem zu überwachenden Bildbereich entsprechenden Bilddaten, wobei der zu überwachende Bildbereich in Bildzonen **(A, B, C)** mit unterschiedlicher vorbestimmter Melderelevanz unterteilt ist, mit:

   a) einem Referenzbildspeicher zum Speichern der Bilddaten eines Bildes als Referenzbilddaten,
   b) einer Differenzbild-Erzeugungseinrichtung zum Vergleichen von aktuellen Bilddaten mit den Referenzbilddaten und zum Erzeugen eines Differenzbildes, in dem Bildpunkte markiert sind, deren Bilddaten sich geändert haben,
   c) einer Objektextraktionseinrichtung **(8)** zum Zusammenfassen von zusammenhängenden markierten Differenzbildpunkten zu Objekten und zum Erstellen einer Objektliste mit die extrahierten Objekte beschreibenden Objektdaten, und
   d) einer Auswertungseinrichtung **(10)** zum Abgeben einer Meldung bei Erfassung einer Veränderung der Position eines Objekts in dem zu überwachenden Bildbereich in Abhängigkeit der Melderelevanz der Objektbildzone vor der Positionsveränderung und der Melderelevanz der Objektbildzone nach der Positionsveränderung.

2. System nach Anspruch 1, **gekennzeichnet durch** eine Eingabevorrichtung (25) mittels der die Bildzonen **(A, B, C)** vorbestimmbar sind.

3. System nach Anspruch 2, **dadurch gekennzeichnet, daß** die Bildzonen (A, B, C) anhand eines die entsprechende Bildzone umschreibenden Polygonzuges definierbar sind, wobei mittels der Eingabevorrichtung (25) die Koordinaten des Polygonzuges eingebbar sind.

4. System nach einem der vorstehenden Ansprüche, **dadurch gekennzeichnet, daß** die Bildzonen **(A, B, C)** eine Erfassungszone **(A)**, eine Alarmzone **(B)** und eine Prioritätszone **(C)** umfassen.

5. System nach Anspruch 4, **dadurch gekennzeichnet, daß** zur Erhöhung der Erfaßbarkeit bei einer Anzeige des zu überwachenden Bildbereichs an einer Anzeigevorrichtung **(14)** die Erfassungszone **(A)** in grüner Farbe, die Alarmzone **(B)** in gelber Farbe und die Prioritätszone **(C)** in roter Farbe darstellbar sind.

6. System nach Anspruch 4, **dadurch gekennzeichnet, daß** die Auswertungseinrichtung **(10)** bei einer Veränderung der Objektposition innerhalb der Erfassungszone **(A)** keine Meldung abgibt.

7. System nach Anspruch 4, **dadurch gekennzeichnet, daß** die Auswertungseinrichtung **(10)** bei einer Veränderung der Objektposition von der Erfassungszone **(A)** in die Alarmzone **(B)** eine Meldung abgibt.

8. System nach Anspruch 4, **dadurch gekennzeichnet, daß** die Auswertungseinrichtung **(10)** bei einer Veränderung der Objektposition in die Prioritätszone **(C)** eine Meldung abgibt.

9. System nach Anspruch 4, **dadurch gekennzeichnet, daß** die Auswertungseinrichtung **(10)** bei der Meldungsabgabe die Veränderung der Objektposition in Bezug auf die unterschiedlichen Bildzonen (A, B, C) gemäß nachstehender Tabelle berücksichtigt, wobei A die Erfassungszone, B die Alarmzone und C die Prioritätszone kennzeichnet:

| VON | NACH | MELDUNGSABGABE |
|-----|------|----------------|
| A | A | nein |
| A | B | ja |
| A | C | ja |
| B | B | nein |
| B | A | nein |
| B | C | ja |
| C | C | ja |
| C | B | ja |
| C | A | nein |

10. System nach einem der Ansprüche 6 bis 9, **dadurch gekennzeichnet, daß** die Meldungsabgabe durch die Auswertungseinrichtung (10) nur dann erfolgt, wenn auch alle übrigen vorbestimmten Relevanz-Kriterien erfüllt sind.

11. System nach einem der Ansprüche 6 bis 10, **dadurch gekennzeichnet, daß** die Auswertungseinrichtung **(10)** anhand der in einer Objektliste gespeicherten Koordinaten des erstmaligen Erfassungspunktes eines Objekts einen Mehrfach-Bildzonenwechsel feststellt.

12. System nach Anspruch 11, dadurch gekennzeichnet, daß die Auswertungseinrichtung **(10)** bei einer Veränderung der Objektposition von der Erfassungszone **(A)** in die Alarmzone **(B)** keine Meldung abgibt, wenn sich die Koordinaten des erstmaligen Erfassungspunktes des Objekts in der Alarmzone **(B)** befinden.

13. System nach einem der vorstehenden Ansprüche, dadurch gekennzeichnet, daß die Auswertungseinrichtung **(10)** eine Meldeobjektprüfungseinheit **(13)** umfaßt, in der die Koordinaten der vorbestimmten Bildzonen **(A, B, C)** gespeichert sind, wobei die Meldeobjektprüfungseinheit **(13)** die Veränderung der Objektposition anhand der Objektkoordinaten eines in einem Objektextraktor **(8)** aus dem Differenzbild extrahierten Objekts und der gespeicherten Objektkoordinaten eines in einem Objektkorrelator **(9)** zugeordneten gespeicherten Objekts ermittelt.

14. Verfahren zur Bewegungsmeldung, mit den Schritten:

    a) Unterteilen eines zu überwachenden Bildbereichs in Bildzonen mit unterschiedlicher vorbestimmter Melderelevanz,
    b) Speichern von dem zu überwachenden Bildbereich entsprechenden Bilddaten als Referenzbilddaten,
    c) Erzeugen eines Differenzbilds durch Markierung derjenigen Bildpunkte, deren Bilddaten sich geändert haben,
    d) Zusammenfassen zusammenhängender, markierter Bildpunkte zu Objekten und Erstellen einer Objektliste mit die extrahierten Objekte beschreibenden Objektdaten, und

e) Abgeben einer Meldung bei Erfassung einer Veränderung der Position eines Objekts in dem zu überwachenden Bildbereich in Abhängigkeit der Melderelevanz der Objektbildzone vor der Positionsveränderung und der Melderelevanz der Objektbildzone nach der Positionsveränderung.

**15.** Verfahren nach Anspruch 14, **dadurch gekennzeichnet, daß** die Bildzonen **(A, B, C)** durch Eingabe der Koordinaten des sie umschreibenden Polygonzuges programmiert werden.

**16.** Verfahren nach einem der Ansprüche 14 oder 15, **dadurch gekennzeichnet, daß** für Objekte, die sich außerhalb der vorbestimmten Bildzonen **(A, B, C)** befinden, keine Auswertung erfolgt.

**17.** Verfahren nach einem der Ansprüche 14 bis 16, **dadurch gekennzeichnet, daß** als vorbestimmte Bildzonen **(A, B, C)** eine Erfassungszone **(A)**, eine Alarmzone **(B)** und eine Prioritätszone **(C)** definierbar sind.

**18.** Verfahren nach Anspruch 17, **dadurch gekennzeichnet, daß** zur Erhöhung der Erfaßbarkeit bei einer Anzeige des zu überwachenden Bildbereichs die Erfassungszone **(A)** in grüner Farbe, die Alarmzone **(B)** in gelber Farbe und die Prioritätszone **(C)** in roter Farbe dargestellt werden.

**19.** Verfahren nach Anspruch 17, **dadurch gekennzeichnet, daß** bei einer Veränderung der Objektposition innerhalb der Erfassungszone **(A)** keine Meldungsabgabe erfolgt.

**20.** Verfahren nach Anspruch 17, **dadurch gekennzeichnet, daß** die Meldungsabgabe bei einer Veränderung der Objektposition in die Prioritätszone **(C)** erfolgt.

**21.** Verfahren nach Anspruch 17, **dadurch gekennzeichnet, daß** die Meldungsabgabe bei einer Veränderung der Objektposition von der Erfassungszone **(A)** in die Alarmzone **(B)** erfolgt.

**22.** Verfahren nach Anspruch 17, **dadurch gekennzeichnet, daß** die Meldungsabgabe bei einer Veränderung der Objektposition in Bezug auf die unterschiedlichen Bildzonen **(A, B, C)** gemäß nachstehender Tabelle erfolgt; wobei A die Erfassungszone, B die Alarmzone und C' die Prioritätszone kennzeichnet:

| VON | NACH | MELDUNGSABGABE |
|-----|------|----------------|
| A | A | nein |
| A | B | ja |
| A | C | ja |
| B | B | nein |
| B | A | nein |
| B | C | ja |
| C | C | ja |
| C | B | ja |
| C | A | nein |

**23.** Verfahren nach einem der Ansprüche 19 bis 22, **dadurch gekennzeichnet, daß** die Meldungsabgabe nur dann erfolgt, wenn auch alle übrigen vorbestimmten Relevanz-Kriterien erfüllt sind.

**24.** Verfahren nach einem der Ansprüche 19 bis 23, **dadurch gekennzeichnet, daß** die Koordinaten des erstmaligen Erfassungspunktes eines Objekts in einer zugehörigen Objektliste gespeichert und zur Erfassung eines Mehrfach-Bildzonenwechsel herangezogen werden.

**25.** Verfahren nach Anspruch 24, **dadurch gekennzeichnet, daß** bei einer Veränderung der Objektposition von der Erfassungszone **(A)** in die Alarmzone **(B)** keine Meldungsabgabe erfolgt, wenn sich die gespeicherten Koordinaten des erstmaligen Erfassungspunktes des Objekts in der Alarmzone **(B)** befinden.

**26.** Verfahren nach einem der vorstehenden Ansprüche, **dadurch gekennzeichnet, daß** die Veränderung der Objekt-

**EP 0 777 864 B1**

position anhand der Objektkoordinaten eines aus dem Differenzbild extrahierten Objekts und der gespeicherten Objektkoordinaten eines zugeordneten gespeicherten Objekts ermittelt wird.

**Claims**

1. Image analysis system for analysing image data corresponding to an image region to be monitored, wherein the image region to be monitored is divided into image zones (A, B, C) having different predetermined signalling relevance, including:

   a) a reference image memory for storing as reference image data the image data of an image,
   b) a differential image generating device for comparing current image data with reference image data and for producing a differential image, in which pixels are marked, whose image data has changed,
   c) an object extraction device (8) for combining into objects assembled, marked differential pixels and for producing an object list having the object data describing the extracted objects, and
   d) an analysis device (10) for producing a signal when detecting a change in the position of an object in the image region to be monitored as a function of the signalling relevance of the object image zone prior to the change of position and the signalling relevance of the object image zone after the change in position.

2. System according to claim 1, characterised by an input device (25) by means of which the image zones (A, B, C) can be predetermined.

3. System according to claim 2, characterised in that the image zones (A, B, C) can be defined with the aid of a polygon describing the corresponding image zone, wherein by means of the input device (25) the co-ordinates of the polygon can be entered.

4. System according to one of the preceding claims, characterised in that the image zones (A, B, C) comprise a detection zone (A), an alarm zone (B) and a priority zone (C) .

5. System according to claim 4, characterised in that for improving the detection when displaying the image region to be monitored on a display device (14), the detection zone
   (A) can be represented in green colour, the alarm zone (B) in yellow colour and the priority zone (C) in red colour.

6. System according to claim 4, characterised in that the analysis device (10) does not produce a signal when the object changes within the detection zone (A).

7. System according to claim 4, characterised in that the analysis device (10) produces a signal when there is a change of the position of the object from the detection zone (A) to the alarm zone (B).

8. System according to claim 4, characterised in that the analysis device (10) produces a signal when there is a change in the position of the object to the priority zone (C) .

9. System according to claim 4, characterised in that the analysis device (10) when producing the signal takes into consideration the change in the position of the object in relation to the various image zones (A, B, C) according to the following table , wherein A characterises the detection zone, B the alarm zone and C the priority zone:

| FROM | TO | SIGNALLING STATE |
|:---:|:---:|:---:|
| A | A | no |
| A | B | yes |
| A | C | yes |
| B | B | no |
| B | A | no |
| B | C | yes |
| C | C | yes |
| C | B | yes |
| C | A | no |

10. System according to one of the claims 6 to 9, characterised in that the signal is produced by the analysis device (10) only when all the other remaining predetermined relevance criteria have been fulfilled.

11. System according to one of the claims 6 to 10, characterised in that the analysis device (10) detects a multiple image zone change with the aid of co-ordinates of the first-time detection point of an object stored in an object list.

12. System according to claim 11, characterised in that the analysis device (10) does not produce a signal during the change in the position of the object from the detection zone (A) to the alarm zone (B) when the co-ordinates of the first-time detection point of the object are situated in the alarm zone (B).

13. System according to one of the preceding claims, characterised in that the analysis device (10) comprises a signalling object test device (13) in which the co-ordinates of the predetermined image zones (A, B, C) are stored, wherein the signalling object test device (13) determines the change in the position of the object with the aid of object co-ordinates of an object extracted from the differential image and the stored object co-ordinates of a stored object associated with an object correlator (9).

14. Method for signalling movement comprising the steps of:

    a) Sub-dividing an image region to be monitored into image zones with different predetermined signalling relevance,
    b) Storing as reference image data the image data corresponding to the image region to be monitored,
    c) Generating a differential image by marking those pixels whose image data has changed,
    d) Combining into objects assembled, marked pixels and producing an object list with object data describing the extracted objects, and
    e) Producing a signal on detecting a change in the position of an object in the image region to be monitored as a function of the signalling relevance of the object image zone prior to the change in position and the signalling relevance of the object image zone after the change in position.

15. Method according to claim 14, characterised in that the image zones (A, B, C) are programmed by inputting the co-ordinates of the polygon to be described.

16. Method according to one of the claims 14 to 15, characterised in that for objects which are located outside the predetermined image zones (A, B, C) no analysis takes place.

17. Method according to one of the claims 14 to 16, characterised in that as the predetermined image zones (A, B, C) can be defined a detection zone (A), an alarm zone (B) and a priority zone (C).

18. Method according to claim 17, characterised in that for increasing the detectability in displaying the image region to be monitored, the detection zone (A) is shown in green colour, the alarm zone (B) in yellow colour and the priority zone (C) in red colour.

19. Method according to claim 17, characterised in that no signal is produced during a change in the position of the object within the detection zone (A).

20. Method according to claim 17, characterised in that a signal is produced when the position of the object changes into the priority zone (C).

21. Method according to claim 17, characterised in that a signal is produced when the position of the object changes from the detection zone (A) into the alarm zone (B).

22. Method according to claim 17, characterised in that a signal is produced when the position of the object is changed in relation to the various image zones (A, B, C) according to the following table: wherein A characterises the detection zone, B the alarm zone and C the priority zone:

| FROM | TO | SIGNALLING STATE |
|------|-----|------------------|
| A | A | NO |
| A | B | YES |

(continued)

| FROM | TO | SIGNALLING STATE |
|------|-----|------------------|
| A | C | YES |
| B | B | NO |
| B | A | NO |
| B | C | YES |
| C | C | YES |
| C | B | YES |
| C | A | NO |

23. Method according to one of the claims 19 to 22, characterised in that a signal is produced only when all other remaining predetermined relevance criteria have been fulfilled.

24. Method according to one of the claims 19 to 23, characterised in that the co-ordinates of the detection point of an object appearing for the first time are stored in an associated object list and are used for detecting a multiple image zone change.

25. Method according to claim 24, characterised in that when the position of the object changes from the detection zone (A) into the alarm zone (B) no signal is produced when the stored co-ordinates of the detection point of the object appearing for the first time are located in the alarm zone (B).

26. Method according to one of the preceding claims, characterised in that the change in the position of the object is determined with the aid of the object co-ordinates of an object extracted from the differential image and the stored object co-ordinates of an associated stored object.

**Revendications**

1. Système d'évaluation d'images pour évaluer des données d'images correspondant à une région d'image à surveiller, la région d'image à surveiller étant divisée en zones d'image (A, B, C) présentant pour l'avertissement des importances prédéfinies différentes, avec :

   a) une mémoire d'images de référence destinée à stocker les données d'une image comme données d'image de référence,
   b) un dispositif générateur d'image différentielle destiné à comparer des données d'image du moment aux données d'image de référence, et à générer une image différentielle sur laquelle des points d'image dont les données d'image ont changé sont marqués,
   c) un dispositif d'extraction d'objet (8) destiné à réunir des points d'image différentielle marqués contigus pour former des objets, et à établir une liste d'objet avec les données d'objet décrivant les objets extraits, et
   d) un dispositif d'évaluation (10) destiné à émettre un avertissement au cas où on détecte un changement de position d'un objet dans la région d'image à surveiller, en fonction de l'importance, pour l'avertissement, de la zone d'image d'objet avant le changement de position, et de l'importance, pour l'avertissement, de la zone d'image d'objet après le changement de position.

2. Système selon la revendication 1, caractérisé par un dispositif d'entrée (25) à l'aide duquel les zones d'image (A, B, C) peuvent être prédéfinies.

3. Système selon la revendication 2, caractérisé en ce que les zones d'image (A, B, C) sont aptes à être définies à l'aide d'un tracé polygonal délimitant la zone d'image correspondante, les coordonnées du tracé polygonal pouvant être entrées à l'aide du dispositif d'entrée (25).

4. Système selon l'une des revendications précédentes, caractérisé en ce que les zones d'image (A, B, C) comprennent une zone de détection (A), une zone d'alarme (B) et une zone de priorité (C).

5. Système selon la revendication 4, caractérisé en ce que pour augmenter la détectabilité, la zone de détection (A) peut être représentée en vert, la zone d'alarme (B) en jaune et la zone de priorité (C) en rouge, si la région d'image

**EP 0 777 864 B1**

à surveiller est affichée au niveau d'un dispositif d'affichage (14).

6. Système selon la revendication 4, caractérisé en ce que le dispositif d'évaluation (10) n'émet pas d'avertissement si la position d'objet change à l'intérieur de la zone de détection (A).

7. Système selon la revendication 4, caractérisé en ce que le dispositif d'évaluation (10) émet un avertissement si la position d'objet passe de la zone de détection (A) à la zone d'alarme (B).

8. Système selon la revendication 4, caractérisé en ce que le dispositif d'évaluation (10) émet un avertissement si la position d'objet passe dans la zone prioritaire (C).

9. Système selon la revendication 4, caractérisé en ce que le dispositif d'évaluation (10), lors de l'émission d'un avertissement, tient compte du changement de la position d'objet par rapport aux différentes zones d'image (A, B, C) selon le tableau suivant, A désignant la zone de détection, B la zone d'alarme et C la zone de priorité :

| DE | VERS | EMISSION D'UN AVERTISSEMENT |
|---|---|---|
| A | A | Non |
| A | B | Oui |
| A | C | Oui |
| B | B | Non |
| B | A | Non |
| B | C | Oui |
| C | C | Oui |
| C | B | Oui |
| C | A | Non |

10. Système selon l'une des revendications 6 à 9, caractérisé en ce que l'émission d'un avertissement par le dispositif d'évaluation (10) ne se fait que si tous les autres critères d'importance prédéfinis sont satisfaits.

11. Système selon l'une des revendications 6 à 10, caractérisé en ce que le dispositif d'évaluation (10) constate un changement multiple de zone d'image à l'aide des coordonnées, mises en mémoire dans une liste d'objet, du premier point de détection d'un objet.

12. Système selon la revendication 11, caractérisé en ce que le dispositif d'évaluation (10), lorsque la position d'objet passe de la position de détection (A) à la zone d'alarme (B), n'émet pas d'avertissement si les coordonnées du premier point de détection de l'objet se trouvent dans la zone d'alarme (B).

13. Système selon l'une des revendications précédentes, caractérisé en ce que le dispositif d'évaluation (10) comprend une unité de contrôle d'objet à signaler (13) dans laquelle sont mises en mémoire les coordonnées des zones d'image prédéfinies (A, B, C), ladite unité de contrôle (13) déterminant le changement de la position d'objet à l'aide des coordonnées d'un objet extrait de l'image différentielle dans un extracteur d'objet (8), et des coordonnées mises en mémoire d'un objet mis en mémoire et affecté dans un corrélateur d'objet (9).

14. Procédé pour signaler un mouvement, qui consiste:

a) à diviser une région d'image à surveiller en zones d'image présentant pour l'avertissement des importances prédéfinies différentes,
b) à mettre en mémoire comme données d'image de référence des données d'image correspondant à la région d'image à surveiller,
c) à produire une image différentielle grâce au marquage des points d'image dont les données d'image ont changé,
d) à réunir des points d'image marqués contigus pour former des objets, et à établir une liste d'objet avec des données d'objet décrivant les objets extraits, et

e) à émettre un avertissement au cas où on détecte un changement de position d'un objet dans la région d'image à surveiller, en fonction de l'importance, pour l'avertissement, de la zone d'image d'objet avant le changement de position, et de l'importance, pour l'avertissement, de la zone d'image d'objet après le changement de position.

15. Procédé selon la revendication 14, caractérisé en ce que les zones d'image (A, B, C) sont programmées grâce à l'entrée des coordonnées du tracé polygonal qui les délimite.

16. Procédé selon la revendication 14 ou 15,
caractérisé en ce que pour les objets qui se trouvent à l'extérieur des zones prédéfinies (A, B, C), il n'y a pas d'évaluation.

17. Procédé selon l'une des revendications 14 à 16,
caractérisé en ce qu'on peut définir comme zones d'image prédéfinies (A, B, C) une zone de détection (A), une zone d'alarme (B) et une zone de priorité (C).

18. Procédé selon la revendication 17, caractérisé en ce que pour augmenter la détectabilité, la zone de détection (A) peut être représentée en vert, la zone d'alarme (B) en jaune et la zone de priorité (C) en rouge, si la région d'image à surveiller est affichée.

19. Procédé selon la revendication 17, caractérisé en ce que si la position d'objet change à l'intérieur de la zone de détection (A), il n'y a pas d'émission d'avertissement.

20. Procédé selon la revendication 17, caractérisé en ce que l'émission d'un avertissement a lieu lorsque la position d'objet passe dans la zone de priorité (C).

21. Procédé selon la revendication 17, caractérisé en ce que l'émission d'un avertissement a lieu lorsque la position d'objet passe de la zone de détection (A) à la zone d'alarme (B).

22. Procédé selon la revendication 17, caractérisé en ce que l'émission d'un avertissement, lorsque la position d'objet change par rapport aux différentes zones d'image (A, B, C), a lieu selon le tableau suivant, A désignant la zone de détection, B la zone d'alarme et C la zone de priorité :

| DE | VERS | EMISSION D'UN AVERTISSEMENT |
| --- | --- | --- |
| A | A | Non |
| A | B | Oui |
| A | C | Oui |
| B | B | Non |
| B | A | Non |
| B | C | Oui |
| C | C | Oui |
| C | B | Oui |
| C | A | Non |

23. Procédé selon l'une des revendications 19 à 22,
caractérisé en ce que l'émission d'un avertissement n'a lieu que si tous les autres critères d'importance prédéfinis sont satisfaits.

24. Procédé selon l'une des revendications 19 à 23,
caractérisé en ce que les coordonnées du premier point de détection d'un objet sont mises en mémoire dans une liste d'objet correspondante et sont utilisées pour la détection d'un changement multiple de zone d'image.

**25.** Procédé selon la revendication 24, caractérisé en ce que lorsque la position d'objet passe de la zone de détection (A) à la zone d'alarme (B), il n'y a pas d'émission d'avertissement si les coordonnées mises en mémoire du premier point de détection de l'objet se trouvent dans la zone d'alarme (B).

**26.** Procédé selon l'une des revendications précédentes, caractérisé en ce que le changement de position d'objet est déterminé à l'aide des coordonnées d'objet d'un objet extrait de l'image différentielle, et des coordonnées mises en mémoire d'un objet mis en mémoire associé.

EP 0 777 864 B1

R1

R2

R

A

Fig. 1

15

Fig. 2

EP 0 777 864 B1